# EUROPEAN PATENT APPLICATION

(11) **EP 3 937 355 A1**
(43) Date of publication of application: **12.01.2022**
(21) Application number: 21183087.2
(22) Date of filing: 01.07.2021
(51) Int. Cl.: H02K 5/22, H02K 11/33, H01R 11/32, H01R 12/70, H01R 31/08

(54) **CONNECTING MEMBER**

(30) Priority: 06.07.2020 JP 2020116588
(71) Applicant: JTEKT CORPORATION, Osaka-shi, Osaka 542-8502 (JP)
(72) Inventor: ODA, Masato, Osaka-shi, 542-8502 (JP); SATO, Yuto, Osaka-shi, 542-8502 (JP)
(74) Representative: Winter, Brandl - Partnerschaft mbB

(57) **Abstract**

A connecting member (7) includes a first electrically-conductive member (40a), a second electrically-conductive member (40b), and an insulating member (11) that accommodates the first electrically-conductive member (40a) and the second electrically-conductive member (40b). Each of the first electrically-conductive member (40a) and the second electrically-conductive member (40b) includes an electric power supply-side connecting portion (101a, 101b), a first substrate-side connecting portion (102a, 102b), a second substrate-side connecting portion (103a, 103b), and a branching portion (104a, 104b) that branches off to a second electric power supply channel to the second substrate-side connecting portion (103a, 103b), at an intermediate point on a first electric power supply channel from the electric power supply-side connecting portion (101a, 101b) to the first substrate-side connecting portion (102a, 102b). The branching portion (104a) of the first electrically-conductive member (40a) and the branching portion (104b) of the second electrically-conductive member (40b) are disposed inside the insulating member (11).

## Description

### BACKGROUND OF THE INVENTION

### 1. Field of the Invention

The invention relates to a connecting member.

### 2. Description of Related Art

WO 2018/070004 discloses a motor apparatus in which a motor and a control device that controls the motor are provided in an integrated manner. The control device of WO 2018/070004 includes a substrate with a first system and a second system mounted thereon, the first system and the second system controlling driving of the motor. The motor and the control device are housed in a housing. Such control device includes an electric power source connector. The electric power source connector includes an electric power supply terminal 44a to be connected to a positive electrode-side terminal of a battery, an electric power supply terminal 44b to be connected to a ground terminal, and an insulating member provided in the housing that houses the motor and the control device. An electrically-conductive member connected to the electric power supply terminal 44a is disposed on a first surface of the insulating member, which is on the side on which the insulating member is in contact with the housing. In other words, the electrically-conductive member connected to the electric power supply terminal 44a is interposed between the first surface of the insulating member and the housing. The electrically-conductive member connected to the electric power supply terminal 44a branches in such a manner as to be connected to the first system part and the second system part of the substrate, respectively. Also, an electrically-conductive member connected to the electric power supply terminal 44b is disposed on a second surface on the opposite side of the insulating member from the side on which the first surface of the insulating member is provided. The electrically-conductive member connected to the electric power supply terminal 44b branches in such a manner as to be connected to the first system part and the second system part of the substrate, respectively.

### SUMMARY OF THE INVENTION

When an electrically-conductive member is assembled to the substrate, stress concentrates on a branching part of the electrically-conductive member. Since the part of the electrically-conductive member, the part branching in such a manner as to be connected to the first system part and the second system part of the substrate, is not covered by the insulating member, the branching part may move when the electrically-conductive member is assembled to the substrate. Therefore, a part of the electrically-conductive member, the part being connected to the substrate, may be displaced relative to the substrate, resulting in decrease in accuracy in position of the electrically-conductive member relative to the substrate.

A first aspect of the invention provides a connecting member. The connecting member includes: a first electrically-conductive member that electrically connects an electric power source and a functional part of a first system on a substrate, the functional part being a target of electric power supply, and electrically connects the electric power source and a functional part of a second system on the substrate; a second electrically-conductive member that electrically connects a ground and the functional part of the first system on the substrate and electrically connects the ground and the functional part of the second system on the substrate; and an insulating member that accommodates the first electrically-conductive member and the second electrically-conductive member. Each of the first electrically-conductive member and the second electrically-conductive member includes a single electric power supply-side connecting portion to be connected to a connection terminal provided in the electric power source, a first substrate-side connecting portion connected to the functional part of the first system on the substrate, a second substrate-side connecting portion connected to the functional part of the second system on the substrate, and a branching portion that branches off to a second electric power supply channel to the second substrate-side connecting portion, at an intermediate point on a first electric power supply channel from the electric power supply-side connecting portion to the first substrate-side connecting portion. The branching portion of the first electrically-conductive member and the branching portion of the second electrically-conductive member are disposed inside the insulating member so as not to be exposed on a surface of the insulating member.

According to the above configuration, the branching portion of the first electrically-conductive member and the branching portion of the second electrically-conductive member are both disposed inside the insulating member. Therefore, when the first electrically-conductive member is assembled to the substrate, even if stress concentrates on the branching portion of the first electrically-conductive member, movement of the branching portion embedded inside the insulating member is curbed. Consequently, accuracy in position of the first substrate-side connecting portion relative to the functional part of the first system on the substrate and accuracy in position of the second substrate-side connecting portion relative to the functional part of the second system on the substrate can be ensured. The same applies to the second electrically-conductive member.

In the above connecting member, the substrate may include a first region on which the functional part of the first system is mounted and a second region on which the functional part of the second system is mounted. Each of the electric power supply-side connecting portions may be disposed in such a manner as to overlap only one of the first region and the second region as viewed in a thickness direction of the substrate.

According to the above configuration, as viewed in the thickness direction of the substrate, in comparison with a case where the electric power supply-side connecting portions are disposed in such a manner as not to overlap the first region and the second region, an increase in size of the connecting member in a direction perpendicular to the thickness direction of the substrate can be curbed. Also, as viewed from the thickness direction of the substrate, in comparison with a case where the electric power supply-side connecting portions are disposed in such a manner as to overlap both the first region and the second region, restriction on the respective positions at which the electric power supply-side connecting portions are disposed can be reduced.

In the above connecting member, the substrate may include a power substrate and a control substrate. A power element group that controls electric current to be supplied to a motor may be mounted on the power substrate. The control substrate and the power substrate may be disposed in such a manner as to face each other in a thickness direction. A control element group that controls driving of the motor may be mounted on the control substrate. The control substrate may be provided between the electric power supply-side connecting portions and the power substrate. The first substrate-side connecting portions and the second substrate-side connecting portions may be connected to the power substrate in a state in which the first electric power supply channel and the second electric power supply channel are inserted through the control substrate via respective through-holes provided in the control substrate.

According to the above configuration, since the substrate-side connecting portions are connected to the power substrate that is more distant from the electric power supply-side connecting portions than the control substrate, the electrically-conductive members are long. If each electrically-conductive member bends at a ratio that is the same between a case where the electrically-conductive member is long and a case where the electrically-conductive member is short, the amounts of displacements of the substrate-side connecting portions relative to the substrate are larger in the case where the electrically-conductive member is long. Therefore, in order to ensure the accuracy in position of the first substrate-side connecting portion relative to the functional part of the first system on the substrate and the accuracy in position of the second substrate-side connecting portion relative to the functional part of the second system on the substrate, it is even more effective to dispose the branching portion inside the insulating member.

The above configuration enables ensuring accuracy in position of the electrically-conductive members relative to the substrate.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a perspective view of a motor apparatus;
FIG. 2 is a schematic sectional view of the motor apparatus;
FIG. 3 is a configuration diagram of an electrically-conductive member;
FIG. 4 is a top view of a control substrate;
FIG. 5 is a top view of a power substrate; and
FIG. 6 is a perspective view of a motor apparatus of a first comparative example.

### DETAILED DESCRIPTION OF EMBODIMENTS

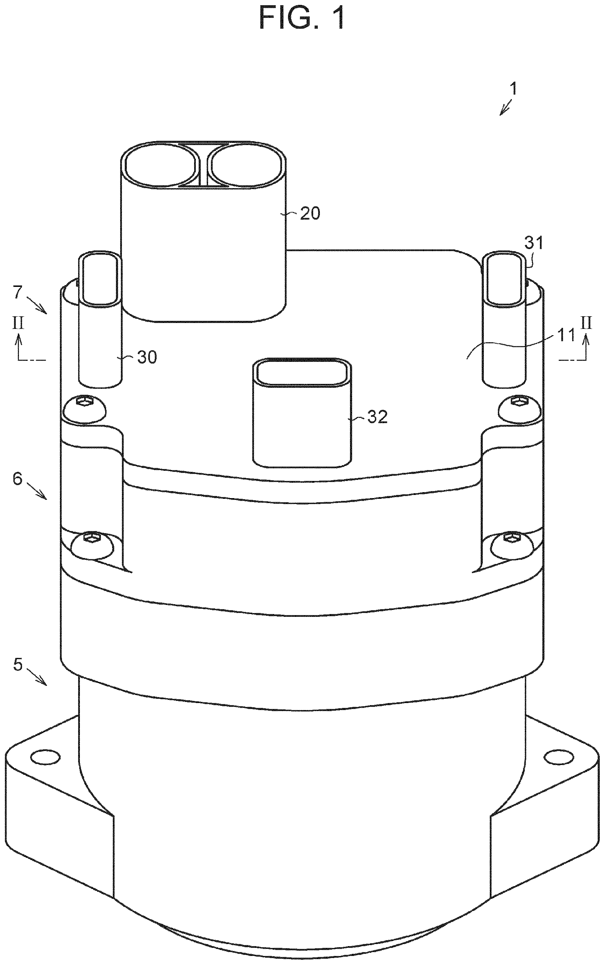

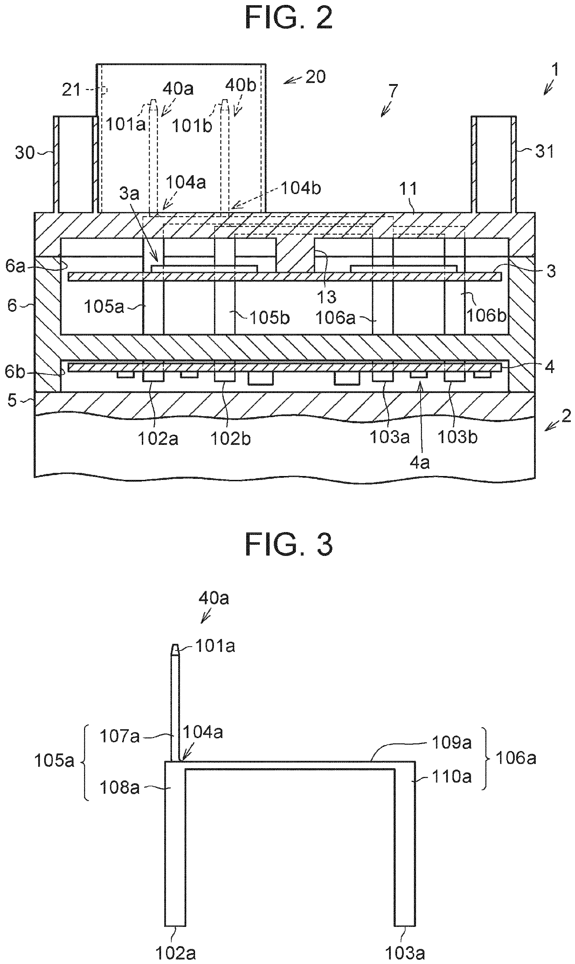

An embodiment in which a connecting member is applied to a motor apparatus will be described with reference to the drawings. As illustrated in FIGS. 1 and 2, a motor apparatus 1 includes a motor 2, a control substrate 3, a power substrate 4, a motor housing 5, a heatsink 6 and a connecting member 7. The motor apparatus 1 is, for example, one that is mounted in an electric power steering system of a vehicle. For the motor 2, for example, a three-phase brushless motor is employed.

As illustrated in FIG. 2, the motor housing 5 has a bottomed tubular shape. The motor housing 5 houses the motor 2. The heatsink 6 is attached to an end portion of the motor housing 5. The heatsink 6 is formed by a metal material having good heat conductivity. In the heatsink 6, a first substrate accommodating portion 6a and a second substrate accommodating portion 6b are provided. The first substrate accommodating portion 6a opens in a surface on the opposite side of the heatsink 6 from the side on which the motor 2 is provided. The second substrate accommodating portion 6b opens in a surface on the motor 2 side of the heatsink 6.

Control element groups 3a that control driving of the motor 2 are mounted on the control substrate 3. Each control element group 3a includes various electronic components such as a microcomputer. The control substrate 3 is accommodated in the first substrate accommodating portion 6a of the heatsink 6. As described later, the control substrate 3 is fixed to, for example, a support portion 13 provided at a cover portion 11 of the connecting member 7.

Power element groups 4a that control current to be supplied to the motor 2 are mounted on the power substrate 4. Each power element group 4a includes a plurality of field-effect transistors (FETs) forming an inverter circuit. The power substrate 4 and the control substrate 3 are disposed in such a manner as to face each other in a thickness direction thereof. The power substrate 4 is accommodated in the second substrate accommodating portion 6b of the heatsink 6. The power substrate 4 is fixed to an inner bottom surface of the second substrate accommodating portion 6b. The power substrate 4 and the control substrate 3 are electrically connected by a non-illustrated substrate-to-substrate connecting portion.

The connecting member 7 includes the cover portion 11 and a plurality of connector portions. The cover portion 11 is attached to the surface on the opposite side of the heatsink 6 from the side on which the motor 2 is provided. The cover portion 11 closes the opening of the first substrate accommodating portion 6a of the heatsink 6. The cover portion 11 is formed by an insulating material such as a synthetic resin material. The support portion 13 is provided at a surface on the motor 2 side of the cover portion 11. The control substrate 3 is fixed to the support portion 13. In the present embodiment, the cover portion 11 configured by an insulating material corresponds to an insulating member.

As illustrated in FIGS. 1 and 2, the connector portions include an electric power source connector portion 20 for connection to a direct-current electric power source such as a battery, a first control device connector portion 30 and a second control device connector portion 31 for connection to an external control device, and a sensor connector portion 32 for connection to a torque sensor of the electric power steering system. Each of these connector portions has a tubular shape and is provided at a surface on the opposite side of the cover portion 11 from the side on which the heatsink 6 is provided. Also, each of these connector portions opens to the side opposite to the side on which the heatsink 6 is provided.

More specifically, the electric power source connector portion 20 includes a substantially-cylindrical fitting portion 21 formed such that two small cylindrical bodies are arranged side by side and one large cylindrical body surrounds the two small cylindrical bodies. In the present embodiment, the fitting portion 21 is formed by an insulating material such as a synthetic resin material. Inside one cylindrical body of the electric power source connector portion 20, a first electrically-conductive member 40a is provided integrally with the fitting portion 21. Inside the other small cylindrical body of the electric power source connector portion 20, a second electrically-conductive member 40b is provided integrally with the fitting portion 21. For sake of convenience, each of components of the first electrically-conductive member 40a is provided with a sign "a" added as a suffix and each of components of the second electrically-conductive member 40b is provided with a sign "b" added as a suffix.

Plug connectors provided for the direct-current electric power source such as a battery and a ground are fitted in the fitting portion 21. The control substrate 3 and the power substrate 4 are connected to a positive terminal of the direct-current electric power source via the first electrically-conductive member 40a and are connected to a negative terminal of the direct-current electric power source via the second electrically-conductive member 40b. Note that in the present embodiment, the negative terminal of the direct-current electric power source is connected to the ground. In the present embodiment, the positive terminal and the negative terminal of the direct-current electric power source correspond to connection terminals of the direct-current electric power source.

The motor 2 includes a first coil group of coils and a second coil group of coils wound on a non-illustrated stator. Each of the first coil group and the second coil group includes U, V and W-phase coils. Each of the first coil group and the second coil group is configured to be independently supplied with driving electric power. In the present embodiment, for example, halves of motor torque required to be generated by the motor 2 are covered by torque generated by the first coil group and torque generated by the second coil group, respectively.

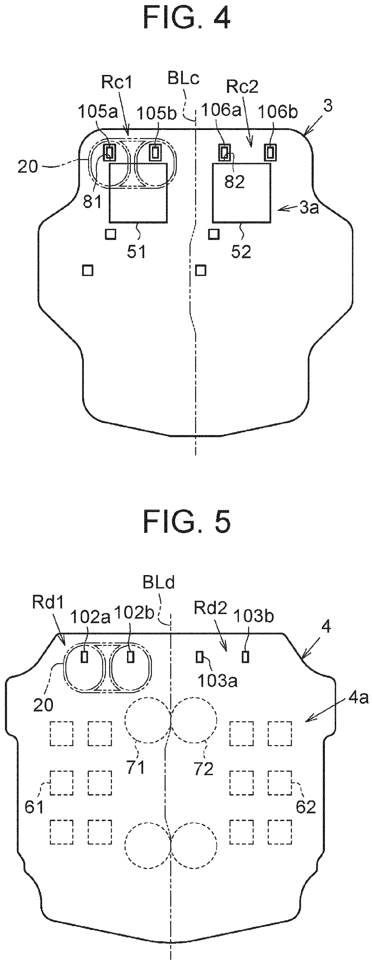

As illustrated in FIG. 4, the control substrate 3 is sectioned in two regions by a boundary line BLc indicated by an alternate long and two short dashes line at a substantially center position. In the present embodiment, a region, on the left side of the boundary line BLc, of the control substrate 3 is a first region Rc1 for a functional part of a first system and a region, on the right side of the boundary line BLc, of the substrate 3 is a second region Rc2 for a functional part of a second system. A control element group 3a for the first system, in which various electronic components such as a first microcomputer 51 are included, is mounted on a mounting surface on the opposite side of the first region Rc1 from the side on which the power substrate 4 is provided. A control element group 3a for the second system, in which various electronic components such as a second microcomputer 52 are included, is mounted on a mounting surface on the opposite side of the second region Rc2 from the side on which the power substrate 4 is provided.

As illustrated in FIG. 5, the power substrate 4 are sectioned in two regions by a boundary line BLd indicated by an alternate long and two short dashes line at a substantially center position. The boundary line BLd substantially coincides with the boundary line BLc sectioning the control substrate 3 as viewed in the thickness direction of the control substrate 3 and the power substrate 4. In the present embodiment, a region, on the left side of the boundary line BLd, of the power substrate 4 is a first region Rd1 for a functional part of the first system and a region, on the right side of the boundary line BLd, of the power substrate 4 is a second region Rd2 for a functional part of the second system. Switching elements 61 of the first system and a smoothing capacitor 71 of the first system are mounted on a mounting surface on the opposite side of the first region Rd1 from the side on which the control substrate 3 is provided. Switching elements 62 of the second system and a smoothing capacitor 72 of the second system are mounted on a mounting surface on the opposite side of the second region Rd2 from the side on which the control substrate 3 is provided.

As illustrated in FIGS. 4 and 5, the control substrate 3 and the power substrate 4 are sectioned by the respective boundary lines BLc, BLd that are substantially identical to each other as viewed in the thickness direction of the control substrate 3 and the power substrate 4. Therefore, the first region Rc1 of the control substrate 3 substantially entirely overlaps the first region Rd1 of the power substrate 4 in the thickness direction of the control substrate 3 and the power substrate 4. Also, the second region Rc2 of the control substrate 3 substantially entirely overlaps the second region Rd2 of the power substrate 4 in the thickness direction of the control substrate 3 and the power substrate 4.

As described above, the motor apparatus 1 is configured to be redundant by the two systems, the first system and the second system. In the motor apparatus 1, the systems monitor and control each other through communication between the control element group 3a of the first system and the control element group 3a of the second system. Consequently, for example, even if one of the systems fails, the control is continued by the other system that does not fail, enabling continuation of driving of the motor apparatus 1.

The first electrically-conductive member 40a and the second electrically-conductive member 40b will be described in detail. As illustrated in FIGS. 2 and 3, each of the first electrically-conductive member 40a and the second electrically-conductive member 40b is formed in a predetermined contour shape by, e.g., flexing a metal plate. The first electrically-conductive member 40a includes a single electric power supply-side connecting portion 101a to be connected to the positive terminal of the direct-current electric power source, a first substrate-side connecting portion 102a and a second substrate-side connecting portion 103a at the power substrate 4, and a branching portion 104a.

The electric power supply-side connecting portion 101a has a rectangular plate shape. The electric power supply-side connecting portion 101a is located inside the fitting portion 21. The electric power supply-side connecting portion 101a extends along the thickness direction of the control substrate 3 and the power substrate 4. A thickness direction of the electric power supply-side connecting portion 101a coincides with a direction in which the small cylindrical bodies of the fitting portion 21 are arranged side by side.

The first substrate-side connecting portion 102a has a rectangular plate shape. Long edges of the first substrate-side connecting portion 102a extend along the thickness direction of the control substrate 3 and the power substrate 4. The first substrate-side connecting portion 102a is joined to the power substrate 4 via soldering. As illustrated in FIG. 5, the first substrate-side connecting portion 102a is connected to the first region Rd1 of the power substrate 4. The first substrate-side connecting portion 102a and a first-system electric power line of the power substrate 4 are electrically connected. Consequently, a first electric power supply channel 105a that supplies electric power of the direct-current electric power source from the electric power supply-side connecting portion 101a to the first substrate-side connecting portion 102a is formed. As illustrated in FIG. 4, the first electric power supply channel 105a is inserted through the control substrate 3 via a through-hole 81 provided in the first region Rc1 of the control substrate 3.

The second substrate-side connecting portion 103a has a rectangular plate shape. Long edges of the second substrate-side connecting portion 103a extend along the thickness direction of the control substrate 3 and the power substrate 4. As illustrated in FIG. 5, the second substrate-side connecting portion 103a is connected to the second region Rd2 of the power substrate 4. The second substrate-side connecting portion 103a is joined to the power substrate 4 via soldering. The second substrate-side connecting portion 103a and a second-system electric power line of the power substrate 4 are electrically connected. Consequently, a second electric power supply channel 106a that supplies electric power of the direct-current electric power source from an intermediate point on the first electric power supply channel 105a to the second substrate-side connecting portion 103a is formed. As illustrated in FIG. 5, the second electric power supply channel 106a is inserted through the control substrate 3 via a through-hole 82 provided in the second region Rc2 of the control substrate 3.

The branching portion 104a is a part that branches off to the second electric power supply channel 106a to the second substrate-side connecting portion 103a, at the intermediate point on the first electric power supply channel 105a from the electric power supply-side connecting portion 101a to the first substrate-side connecting portion 102a. Because of including the branching portion 104a, the first electrically-conductive member 40a has a bifurcated shape and the substrate-side connecting portions, which are respective distal end portions of the branched parts, are connected to the first region Rd1 and the second region Rd2 of the power substrate 4, respectively. The branching portion 104a is embedded in the cover portion 11. Consequently, the branching portion 104a is disposed inside the cover portion 11 so as not to be exposed on a surface of the cover portion 11.

The first electric power supply channel 105a includes a first linking portion 107a that links the electric power supply-side connecting portion 101a and the branching portion 104a with each other and a second linking portion 108a that links the first substrate-side connecting portion 102a and the branching portion 104a with each other. The electric power supply-side connecting portion 101a, which is an end portion on the opposite side of the first linking portion 107a from the side on which the power substrate 4 is provided, is located inside the fitting portion 21. A part of the first linking portion 107a, the part being connected to the branching portion 104a, that is, an end portion, on the side on which the power substrate 4 is provided, of the first linking portion 107a is embedded inside the cover portion 11. Also, a part of the second linking portion 108a, the part being connected to the branching portion 104a, that is, an end portion on the opposite side of the second linking portion 108a from the side on which the power substrate 4 is provided, is embedded inside the cover portion 11. The first substrate-side connecting portion 102a, which is an end portion on the power substrate 4 side of the second linking portion 108a, is joined to the first region Rd1 of the power substrate 4 by soldering. Consequently, the first electric power supply channel 105a that supplies electric power of the direct-current electric power source from the electric power supply-side connecting portion 101a to the first substrate-side connecting portion 102a is formed.

The second electric power supply channel 106a has a substantially L-shape. The second electric power supply channel 106a includes a third linking portion 109a extending along a direction perpendicular to the thickness direction of the control substrate 3 and the power substrate 4 and a fourth linking portion 110a extending along the thickness direction of the control substrate 3 and the power substrate 4. The third linking portion 109a is embedded inside the cover portion 11. An end portion on the opposite side of the fourth linking portion 110a from the side on which the power substrate 4 is provided is connected to one end portion of the third linking portion 109a. A part of the fourth linking portion 110a, the part being connected to the third linking portion 109a, that is, an end portion on the opposite side of the fourth linking portion 110a from the side on which the power substrate 4 is provided is embedded inside the cover portion 11. The second substrate-side connecting portion 103a, which is an end portion on the power substrate 4 side of the fourth linking portion 110a, is joined to the second region Rd2 of the power substrate 4 by soldering. Consequently, the second electric power supply channel 106a that supplies electric power of the direct-current electric power source from the intermediate point on the first electric power supply channel 105a to the second substrate-side connecting portion 103a is formed.

As illustrated in FIGS. 4 and 5, as viewed in the thickness direction of the control substrate 3 and the power substrate 4, the first substrate-side connecting portion 102a and the first electric power supply channel 105a are disposed in such a manner as to overlap the first regions Rc1, Rd1 only. Also, as viewed in the thickness direction of the control substrate 3 and the power substrate 4, the third linking portion 109a of the second electric power supply channel 106a is disposed in such a manner as to overlap both the first regions Rc1, Rd1 and the second regions Rc2, Rd2. Also, as viewed in the thickness direction of the control substrate 3 and the power substrate 4, the fourth linking portion 110a of the second electric power supply channel 106a is disposed in such a manner as to overlap the second regions Rc2, Rd2 only. Also, as viewed in the thickness direction of the control substrate 3 and the power substrate 4, the electric power supply-side connecting portion 101a is disposed in such a manner as to overlap the first regions Rc1, Rd1 only. Also, as viewed in the thickness direction of the control substrate 3 and the power substrate 4, the electric power source connector portion 20 partially overlaps the first microcomputer 51 mounted on the first region Rc1.

The second electrically-conductive member 40b has a shape that is similar to that of the first electrically-conductive member 40a. Because of including a branching portion 104b of the second electrically-conductive member 40b, the second electrically-conductive member 40b has a bifurcated shape and a first substrate-side connecting portion 102b, which is a distal end portion of one branched part, is connected to the first region Rd1 of the power substrate 4, and a second substrate-side connecting portion 103b, which is a distal end portion of the other branched part, is connected to the second region Rd2 of the power substrate 4. An electric power supply-side connecting portion 101b of the second electrically-conductive member 40b is a single electric power supply-side connecting portion to be connected to the negative terminal provided in the direct-current electric power source.

Direct-current electric power is supplied to the control substrate 3 and the power substrate 4 via the first electrically-conductive member 40a and the second electrically-conductive member 40b, respectively. The first microcomputer 51 of the control substrate 3 generates a switching instruction for the switching elements 61 forming an inverter circuit of the power substrate 4 based on a rotational angle of the motor 2, the rotational angle being detected through a rotational angle sensor. Also, the second microcomputer 52 of the control substrate 3 generates a switching instruction for the switching elements 62 forming an inverter circuit of the power substrate 4 based on a rotational angle of the motor 2, the rotational angle being detected by a rotational angle sensor. As a result of switching of the respective switching elements being performed based on switching instructions generated by the microcomputers, the direct-current electric power supplied from the direct-current electric power source is converted into three-phase alternating-current electric power. The alternating-current electric power generated by each inverter circuit is supplied to a stator coil of the motor 2 via respective electric power supply channels between the inverter circuits and the motor 2.

A method for manufacturing the connecting member 7 will be described. In manufacture of the connecting member 7, first, the electrically-conductive members are manufactured. The first electrically-conductive member 40a made of metal is manufactured in such a manner as to have a predetermined contour shape by means of, for example, plastic forming using cold forging. The same applies to the second electrically-conductive member 40b. A mold for molding the connecting member 7 is assembled in such a manner as to surround the first electrically-conductive member 40a and the second electrically-conductive member 40b manufactured. The mold has a shape corresponding to an outer surface shape of the connecting member 7. In other words, the mold includes a single electric power source connector portion molding portion for provision of the single electric power source connector portion 20 in the connecting member 7. In a state in which the first electrically-conductive member 40a and the second electrically-conductive member 40b are inserted in the mold for forming the connecting member 7, molten resin is injected into the mold and the cover portion 11 is thereby molded, and the connecting member 7 is thus manufactured.

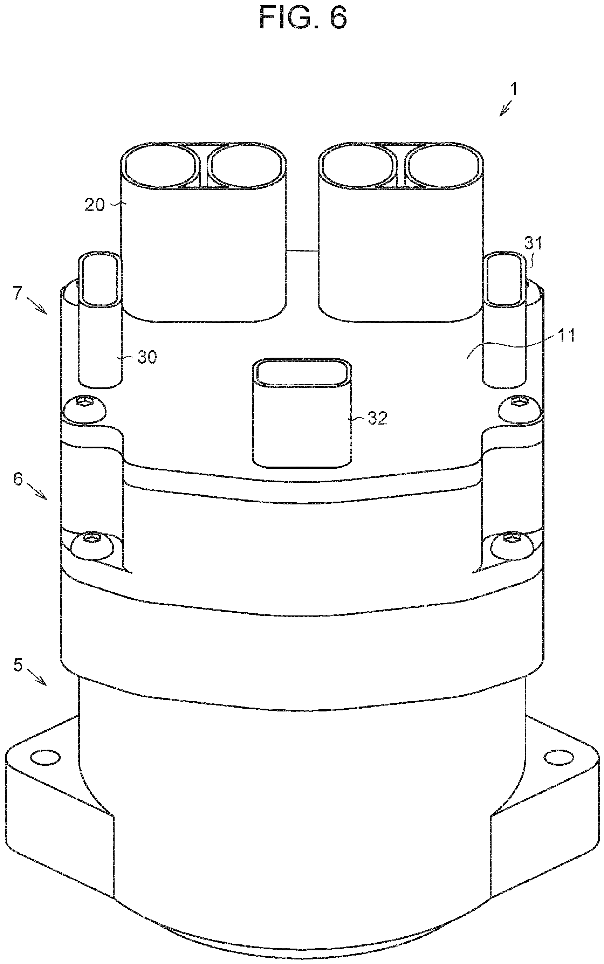

As illustrated in FIG. 6, as a first comparative example, a case where a connecting member in which an electric power source connector portion is provided for a first system and an electric power source connector portion is provided for a second system is molded is assumed. In the first comparative example, the electric power source connector portion for the first system is disposed at a position that is similar to that of the present embodiment. A mold for molding the connecting member of the first comparative example includes two electric power source connector portion molding portions for provision of two electric power source connector portions in the connecting member. In this case, only the electric power source connector portion molding portion for the second system is mainly changed between the mold for molding the connecting member of the first comparative example and the mold for molding the connecting member 7 of the present embodiment. As such, a major part of the mold is common between the mold for molding the connecting member of the first comparative example and the mold for molding the connecting member 7 of the present embodiment. Electrically-conductive members inserted inside the mold are changed between when the connecting member of the first comparative example is molded and when the connecting member 7 of the present embodiment is molded.

As a second comparative example, a case where a connecting member in which a single electric power source connector portion is provided for provision of a single system only is molded is assumed. A mold for molding the connecting member of the second comparative example includes a single electric power source connector portion molding portion for provision of a single electric power source connector portion in the connecting member. In this case, there is no specific part changed between the mold for molding the connecting member of the second comparative example and the mold for molding the connecting member 7 of the present embodiment. Electrically-conductive members to be inserted inside the mold are changed between when the connecting member of the second comparative example is molded and when the connecting member 7 of the present embodiment is molded.

A method for assembling the motor apparatus 1 will be described. After manufacture of the connecting member 7, the control substrate 3 is fixed to the support portion 13 provided at the cover portion 11 of the connecting member 7, the power substrate 4 is fixed to the second substrate accommodating portion 6b of the heatsink 6 and the motor 2 is placed inside the motor housing 5. When the control substrate 3 is fixed to the support portion 13, the first electric power supply channel 105a is inserted through the through-hole 81 provided in the first region Rc1 of the control substrate 3 and the second electric power supply channel 106a is inserted in the through-hole 82 provided in the second region Rc2 of the control substrate 3. The same applies to the second electrically-conductive member 40b. Subsequently, the cover portion 11 of the connecting member 7 is attached to the heatsink 6 in such a manner as to close the opening of the first substrate accommodating portion 6a of the heatsink 6. When the cover portion 11 is attached to the heatsink 6, the first substrate-side connecting portion 102a is joined to the first region Rd1 of the power substrate 4 and the second substrate-side connecting portion 103a is joined to the second region Rd2 of the power substrate 4. The same applies to the second electrically-conductive member 40b. Subsequently, the heatsink 6 with the control substrate 3, the power substrate 4 and the connecting member 7 attached thereto is attached to an end portion of the motor housing 5 with the motor 2 accommodated inside. As above, assembling of the motor apparatus 1 is completed.

Operation of the present embodiment will be described. The branching portion 104a of the first electrically-conductive member 40a and the branching portion 104b of the second electrically-conductive member 40b are both disposed inside the cover portion 11. Therefore, when the first substrate-side connecting portion 102a and the second substrate-side connecting portion 103a of the first electrically-conductive member 40a are joined to the power substrate 4, even if stress concentrates on the branching portion 104a of the first electrically-conductive member 40a, movement of the branching portion 104a embedded inside the cover portion 11 is curbed. Consequently, accuracy in position of the first substrate-side connecting portion 102a relative to the first region Rd1 of the power substrate 4 and accuracy in position of the second substrate-side connecting portion 103a relative to the second region Rd2 of the power substrate 4 can be ensured. The same applies to the second electrically-conductive member 40b.

Effects of the present embodiment will be described. Since the respective branching portions are embedded inside the cover portion 11, accuracy in position of the respective electrically-conductive members relative to the power substrate 4 can be ensured.

In the present embodiment, as viewed in the thickness direction of the control substrate 3 and the power substrate 4, the electric power supply-side connecting portion 101a of the first electrically-conductive member 40a is disposed in such a manner as to overlap the first regions Rc1, Rd1 only and the electric power supply-side connecting portion 101b of the second electrically-conductive member 40b is disposed in such a manner as to overlap the first regions Rc1, Rd1 only. In comparison with a case where the electric power supply-side connecting portion 101a of the first electrically-conductive member 40a is disposed in such a manner as not to overlap the first regions Rc1, Rd1 and the second regions Rc2, Rd2, an increase in size of the connecting member 7 in the direction perpendicular to the thickness direction of the control substrate 3 and the power substrate 4 can be curbed. Also, as viewed in the thickness direction of the control substrate 3 and the power substrate 4, in comparison with a case where the electric power supply-side connecting portion 101a of the first electrically-conductive member 40a is disposed in such a manner as to overlap both the first regions Rc1, Rd1 and the second regions Rc2, Rd2, restriction on the position at which the electric power supply-side connecting portion 101a is disposed can be reduced. The same applies to the second electrically-conductive member 40b.

The control substrate 3 and the power substrate 4 are disposed in such a manner as to face each other in the thickness direction. In this case, since the first substrate-side connecting portion 102a and the second substrate-side connecting portion 103a are connected to the power substrate 4 that is more distant from the electric power supply-side connecting portion 101a than the control substrate 3, the first electrically-conductive member 40a is long. If the first electrically-conductive member 40a bends at a ratio that is the same between a case where the first electrically-conductive member 40a is long and a case where the first electrically-conductive member 40a is short, amounts of displacement of the first substrate-side connecting portion 102a and the second substrate-side connecting portion 103a relative to the power substrate 4 are larger in the case where the first electrically-conductive member 40a is long. Therefore, in order to ensure the accuracy in position of the first substrate-side connecting portion 102a relative to the first region Rd1 of the power substrate 4 and the accuracy in position of the second substrate-side connecting portion 103a relative to the second region Rd2 of the power substrate 4, it is even more effective to dispose the branching portion 104a inside the cover portion 11. The same applies to the second electrically-conductive member 40b.

Even where only a single plug connector is provided for each of the direct-current electric power source such as a battery and the ground, employment of the above connecting member 7 enables connection of the motor apparatus 1 configured to be redundant by the first system and the second system.

Many parts can be used in common by the motor apparatus using the connecting member of the first comparative example and the motor apparatus 1 using the connecting member 7 of the present embodiment. More specifically, by the positions at which the respective substrate-side connecting portions are connected to the power substrate 4 being made to be the same between the connecting member of the first comparative example and the connecting member 7 of the present embodiment, the control substrate 3 and the power substrate 4 can be used in common. Therefore, where the motor apparatus using the connecting member of the first comparative example and the motor apparatus 1 using the connecting member 7 of the present embodiment are manufactured, both the motor apparatuses can be manufactured on a common manufacturing line for steps except manufacture of the connecting member 7.

Where the motor apparatus 1 of the present embodiment is mounted in an electric power steering system of a vehicle, the electric power source connector portion of the connecting member 7 is connected to a battery of the vehicle. Here, whether or not the battery of the vehicle and the electric power source connector portion are connected via a single connector or a plurality of plug connectors often depends on the safety requirements specifications of the vehicle. With regard to this point, many components and manufacturing steps of the motor apparatus 1 using the connecting member 7 of the present embodiment can be made in common with the motor apparatus using the connecting member of the first comparative example. Consequently, even if an electric power source connector portion of a motor apparatus is changed according to the safety requirements specifications of the vehicle, the motor apparatus can be provided with the smallest possible number of changes.

The number of parts changed between the mold for molding the connecting member of the first comparative example and the mold for molding the connecting member 7 can be minimized. The mold for molding the connecting member of the second comparative example and the mold for molding the connecting member 7 of the present embodiment can be made common. In other words, a mold can be used to manufacture the connecting member of the second comparative example or the connecting member 7 of the present embodiment, merely by changing the shape of the electrically-conductive members to be inserted in the mold when the relevant connecting member is manufactured.

In comparison with electrically-conductive members to be connected to a direct-current electric power source such as a battery, and a ground, electrically-conductive members to be connected to, e.g., an external control device are generally small in size and vulnerable to deformation such as flexing. In light of this point, in the present embodiment, from among electrically-conductive members, those that are large in size and have resistance to deformation such as flexing are used particularly for the first electrically-conductive member 40a and the second electrically-conductive member 40b, which are branching electrically-conductive members. Therefore, it is possible to obtain the aforementioned effects while ensuring reliability of the entire connecting member 7.

The above-described embodiment may be altered as follows. Also, the below alterations can be combined to one another as long as such combination causes no technical contradiction. In the above-described embodiment, the power substrate 4 may be provided between the cover portion 11 and the control substrate 3. In other words, respective positional relationships of the control substrate 3 and the power substrate 4 with the connecting member 7 can appropriately be changed.

Although in the above-described embodiment, the control element groups 3a that control driving of the motor 2 and the power element groups 4a that control electric current to be supplied to the motor 2 are mounted on different substrates, the control element groups 3a and the power element groups 4a may be mounted on a same substrate.

Although in the above-described embodiment, the first electric power supply channel 105a and the second electric power supply channel 106a of the first electrically-conductive member 40a are inserted through the control substrate 3 via the through-holes 81, 82 provided in the control substrate 3, the first electric power supply channel 105a and the second electric power supply channel 106a may be disposed outside the control substrate 3 as viewed in the thickness direction of the control substrate 3, by being disposed in such a manner as to skirt around the control substrate 3. The same applies to the second electrically-conductive member 40b.

Although the electric power supply-side connecting portion 101a of the first electrically-conductive member 40a is disposed in such a manner as to overlap the first regions Rc1, Rd1 only as viewed in the thickness direction of the control substrate 3 and the power substrate 4, the electric power supply-side connecting portion 101a may be disposed in such a manner as to overlap the second regions Rc2, Rd2 only. Also, the electric power supply-side connecting portion 101a of the first electrically-conductive member 40a may be disposed in such a manner as to overlap both the first regions Rc1, Rd1 and the second regions Rc2, Rd2 as viewed in the thickness direction of the control substrate 3 and the power substrate 4. Also, the electric power supply-side connecting portion 101a of the first electrically-conductive member 40a may be disposed in such a manner as not to overlap the first regions Rc1, Rd1 and the second regions Rc2, Rd2 as viewed in the thickness direction of the control substrate 3 and the power substrate 4. The same applies to the second electrically-conductive member 40b.

In the above-described embodiment, the shape of the branching portion 104a can arbitrarily be changed. For example, the branching portion 104a may have a T-shape. In this case, for example, the second linking portion 108a of the first electric power supply channel 105a has a substantial L-shape. The second linking portion 108a has a part extending along the direction perpendicular to the thickness direction of the control substrate 3 and the power substrate 4 and also has a part extending along the thickness direction of the control substrate 3 and the power substrate 4. The part of the second linking portion 108a of the present alteration, the part extending in the direction perpendicular to the thickness direction of the control substrate 3 and the power substrate 4, is provided on the opposite side of the branching portion 104a from the side on which the third linking portion 109a is provided.

In the above embodiment, the shape of the motor apparatus 1 can appropriately be changed. The motor apparatus 1 is not limited to one to be mounted in an electric power steering system of a vehicle, but may be, for example, one to be mounted on a steer-by-wire steering system. Where the motor apparatus 1 is mounted in a steer-by-wire steering system, the motor apparatus 1 is a source of generation of a steering reaction force or a source of generation of a steering force that turns steered wheels.

The connecting member 7 may be embodied as a connecting member of an electric device other than the motor apparatus 1.

## Claims

1. A connecting member (7) **characterized by** comprising:
a first electrically-conductive member (40a) that electrically connects an electric power source and a functional part of a first system on a substrate, the functional part being a target of electric power supply, and electrically connects the electric power source and a functional part of a second system on the substrate;
a second electrically-conductive member (40b) that electrically connects a ground and the functional part of the first system on the substrate and electrically connects the ground and the functional part of the second system on the substrate; and
an insulating member (11) that accommodates the first electrically-conductive member (40a) and the second electrically-conductive member (40b), wherein
each of the first electrically-conductive member (40a) and the second electrically-conductive member (40b) includes a single electric power supply-side connecting portion (101a, 101b) to be connected to a connection terminal provided in the electric power source, a first substrate-side connecting portion (102a, 102b) connected to the functional part of the first system on the substrate, a second substrate-side connecting portion (103a, 103b) connected to the functional part of the second system on the substrate, and a branching portion (104a, 104b) that branches off to a second electric power supply channel to the second substrate-side connecting portion (103a, 103b), at an intermediate point on a first electric power supply channel from the electric power supply-side connecting portion (101a, 101b) to the first substrate-side connecting portion (102a, 102b), and
the branching portion (104a) of the first electrically-conductive member (40a) and the branching portion (104b) of the second electrically-conductive member (40b) are disposed inside the insulating member (11) so as not to be exposed on a surface of the insulating member (11).

2. The connecting member (7) according to claim 1, **characterized in that**:
the substrate includes a first region on which the functional part of the first system is mounted and a second region on which the functional part of the second system is mounted; and
each of the electric power supply-side connecting portions (101a, 101b) is disposed in such a manner as to overlap only one of the first region and the second region as viewed in a thickness direction of the substrate.

3. The connecting member (7) according to claim 1 or 2, **characterized in that**:
the substrate includes a power substrate (4) and a control substrate (3), a power element group (4a) that controls electric current to be supplied to a motor is mounted on the power substrate (4), the control substrate (3) and the power substrate (4) are disposed in such a manner as to face each other in a thickness direction and a control element group (3a) that controls driving of the motor is mounted on the control substrate (3);
the control substrate (3) is provided between the electric power supply-side connecting portions (101a, 101b) and the power substrate (4); and
the first substrate-side connecting portions (102a, 102b) and the second substrate-side connecting portions (103a, 103b) are connected to the power substrate (4) in a state in which the first electric power supply channel and the second electric power supply channel are inserted through the control substrate (3) via respective through-holes provided in the control substrate (3).
